# DEMANDE DE BREVET EUROPEEN

(11) **EP 1 186 252 A1**
(43) Date de publication de la demande: **13.03.2002**
(21) Numéro de dépôt: 00119740.9
(22) Date de dépôt: 09.09.2000
(51) Int. Cl.: A44C 5/10

(54) **Bracelet a maillons**

(71) Demandeur: Conseils et Manufactures VLG SA, 2008 Neuchâtel (CH)
(72) Inventeur: Cazard, Olivier, 25120 Maiche (FR)
(74) Mandataire: Micheli & Cie

(57) **Abrégé**

Le bracelet à maillons comporte deux rangées de maillons latéraux (1) formant les bords du bracelet et au moins une rangée de maillons centraux (2). Les maillons latéraux (1) comportent chacun deux trous borgnes (3) débouchant sur leur tranche interne dirigée vers les maillons centraux (2) et les maillons centraux (2) sont traversés de deux trous traversant (6) chacun. Des goupilles libres (7) sont disposées dans les trous (3,6) des maillons latéraux (1) et centraux (2) librement mais sans jeu, et comporte à chacune-de leurs extrémités une gorge (10). Les maillons latéraux (1) comportent, débouchant sur leur face inférieure, au moins un évidement (5) donnant accès à une gorge (10) de deux goupilles (7) adjacentes. Des éléments de blocage (8) sont destinés à être insérés dans les évidements (5) des maillons latéraux (1) et comportent des organes de retenue (9) coopérant avec les gorges (10) des goupilles (7).

## Description

La présente invention se rapporte à des bracelets à maillons, notamment des bracelets de montre, en acier, en métal précieux ou dans un autre matériau. Dans de tels bracelets les maillons sont maintenus entre eux et articulés sur des goupilles qui peuvent être soit chassées ou vissées, soit libres. La présente invention concerne des bracelets à maillons retenus entre eux et articulés les uns par rapport aux autres à l'aide de goupilles libres.

On connaît un tel bracelet du document FR 2 688 984 qui divulgue un bracelet à maillons assemblés à l'aide de goupilles libres dont les extrémités comportent des gorges coopérant avec des logements que présentent des cavaliers destinés à être fixés en position de service dans un évidement que comportent les maillons externes, évidement débouchant sur la face latérale interne de ces maillons. La fixation des cavaliers dans les maillons externes s'effectue à l'aide de vis.

Les bracelets à maillons de ce type présentent des inconvénients importants liés à la fixation par vis des cavaliers dans les maillons externes.

En effet, une telle fixation par vis nécessite l'utilisation d'un outil, un tournevis, pour le montage et le démontage du bracelet ou sa mise en longueur. De plus ces bracelets présentent une faiblesse à des efforts de tractions latéraux, tout l'effort étant repris par la seule vis qui est forcément de très faible diamètre.

Enfin le montage et la mise de longueur de ces bracelets doivent être effectués par du personnel spécialisé, la mise en place des cavaliers sur les goupilles puis dans les logements des maillons externes et leur fixation à l'aide de vis étant un travail minutieux nécessitant le plus souvent un perçage et des outils spécifiques.

La présente invention a pour but la réalisation d'un bracelet à maillons retenus et articulés les uns aux autres par des goupilles libres qui d'une part résistent particulièrement bien aux efforts de tractions latéraux et qui d'autre part puissent être montés, démontés et mis de longueur par du personnel non spécialisé, notamment par l'usager lui-même, sans perçage ni outils. Un autre but de l'invention est de réaliser un tel bracelet avec un minimum de pièces différentes pour en réduire le coût, en faciliter la fabrication et le montage.

La présente invention a pour objet un bracelet à maillons retenus et articulés entre eux à l'aide de goupilles libres qui obvie aux inconvénients précités et qui réalise les buts précités. Ce bracelet se distingue par les caractéristiques énumérées à la revendication 1 et pouvant présenter celles énoncées aux revendications dépendantes.

Le dessin annexé illustre schématiquement et à titre d'exemple deux formes d'exécution et des variantes du bracelet à maillons selon la présente invention.

La figure 1 est une vue éclatée de dessus d'un brin de bracelet comportant des maillons de formes simples.

La figure 1a illustre un maillon latéral du bracelet illustré à la figure 1 vu de dessous.

La figure 2 est une vue éclatée de dessus d'un brin de bracelet présentant des maillons en forme de H.

La figure 3 et 4 sont des vues de détails de dessous et de dessus à plus grande échelle du brin de bracelet illustré à la figure 2 illustrant en détail le blocage des goupilles dans les maillons extérieurs.

La figure 5 illustre une première variante des éléments de blocage.

La figure 6 illustre une seconde variante des éléments de blocage.

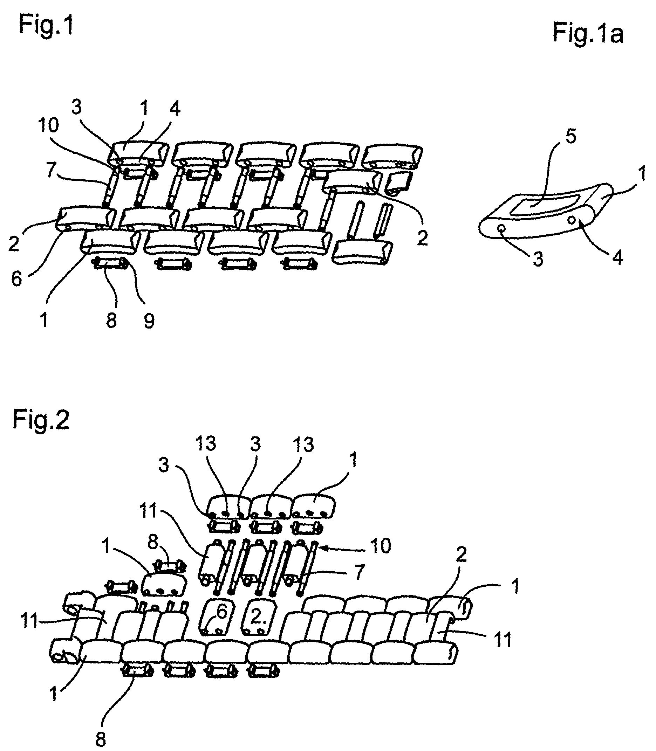

La première forme d'exécution du bracelet illustrée à la figure 1 est constituée d'un ensemble de maillons de forme simple disposés en plusieurs rangs, généralement de trois à cinq rangs.

Le bracelet comporte des maillons latéraux 1 formant les bords du bracelet et des maillons centraux 2 disposés entre les deux rangées de maillons latéraux 1.

Les maillons latéraux 1 comportent chacun deux trous borgnes 3 débouchant sur leurs faces latérales internes 4 et dans un évidement 5 du maillon latéral 1 débouchant sur sa face inférieure destinée à entrer en contact avec le poignet du porteur du bracelet.

Les maillons centraux 2 sont traversés transversalement de part en part par deux perçages 6.

Les maillons 1,2 sont reliés et articulés entre eux au moyen de goupilles libres 7 disposées dans le sens transversal du bracelet. Ces goupilles 7 comportent une gorge 10 à chacune de leur extrémité, ces gorges étant situées en position de service assemblée dans les logements 5 des maillons latéraux 1.

Le bracelet comporte encore des éléments de blocage 8 comportant une plaque dorsale présentant la forme et les dimensions de l'ouverture de l'évidement 5 et deux organes de retenue élastiques 9 venant en position de service assemblée se situer dans les gorges des goupilles et prenant appui élastiquement sur celles-ci.

Ainsi en position assemblée du bracelet ces éléments de blocage 8 assurent le maintien des maillons latéraux dans le sens latéral et obturent les évidements 5. L'élasticité des organes de retenue 9 permet le maintien des organes de blocage 8 en position de blocage dans les évidements 5 des maillons latéraux.

Cet assemblage présente une grande résistance aux tractions transversales auxquelles le bracelet peut être soumis tout effort étant transmis par les éléments de blocage 8 entre les goupilles 7 et les maillons latéraux 1 grâce à de grandes surfaces d'appui tant sur les goupilles que sur les maillons.

Cet assemblage se distingue tout particulièrement en ce que le blocage axial des goupilles 7 et la tenue des éléments de blocage 8 dans les maillons latéraux correspondant sont réalisés par une pièce unique dont la mise en place et le retrait se fait sans perçage ou outillage et peut même s'automatiser.

Cet assemblage a deux fonctions:
1. Le positionnement transversal de l'élément de blocage 8 dans les maillons latéraux 1. L'élément de blocage 8 est placé dans un évidement 5 ne débouchant que sur la face inférieure du maillon latéral correspondant. Cet élément de blocage 8 transmet les efforts d'arrachement par de grandes surfaces d'appui et de guidage. Si on écarte les maillons latéraux 1, l'effort est transmis à partir des faces externes des gorges des goupilles sur les faces externes des éléments de blocage puis des faces internes de l'élément de blocage sur les faces internes des maillons latéraux. L'élasticité de l'élément de blocage n'intervient pas dans ce positionnement transversal. L'élément de blocage travaille en cisaillement.
2. La tenue et le maintien des éléments de blocage dans les maillons latéraux. La forme des organes de retenue des éléments de blocage qui correspond à celle des gorges des goupilles permet un maintien de cet élément de blocage par son élasticité propre entre deux goupilles adjacentes. L'élasticité de l'élément de blocage permet sa mise en place facile et le maintien dans sa position de service.

De plus grâce à cet assemblage le positionnement longitudinal des maillons les uns par rapport aux autres est distinct de leur positionnement transversal. Ce positionnement longitudinal est obtenu simplement par l'ajustement des goupilles 7 dans les trous correspondants 3,6 des maillons 1,2 et peut donc être très précis tout en ne faisant intervenir que des usinages simples. On peut ainsi réaliser des bracelets dont les maillons s'articulent les uns aux autres pratiquement sans jeu de façon simple et peu onéreuse.

Pour assembler le bracelet on place en premier les maillons latéraux 1 sur un côté, on y enfile les goupilles 7 dans les trous borgnes 3. Puis on enfile les maillons centraux 2 sur les goupilles 7 et enfin on introduit les extrémités libres des goupilles 7 dans les trous borgnes 3 de la rangée de maillons latéraux 1 formant l'autre bord du bracelet. Quand les maillons latéraux 1 sont en appui sur les maillons centraux, les gorges 10 des goupilles 7 sont automatiquement positionnées au droit des évidements 5 des maillons latéraux 1. On introduit alors les éléments de blocage 8 dans ces évidements 5 en les forçant, provoquant un déplacement élastique des organes de retenue 9 entrant en contact avec le fond des gorges 10 des goupilles 7. La forme des organes de retenue 9 est telle qu'une fois en place ils maintiennent les éléments de blocages 8 en position de service assemblé.

L'assemblage du bracelet peut être réalisé manuellement sans outils. Cet assemblage est entièrement réversible à tout moment. Pour le démontage du bracelet il suffit d'enlever les éléments de blocage 8 qui ne sont retenus en position que par l'élasticité des organes de retenue appliqués contre les goupilles 7.

Le bracelet décrit et son mode d'assemblage original présentent de nombreux avantages.

Le bracelet est réalisé de bout en bout de la même manière à l'aide des mêmes éléments. Sa conception fait qu'il n'est pas nécessaire d'avoir des maillons spéciaux pour la mise de longueur des extrémités du bracelet.

Ce mode d'assemblage réduit au minimum le nombre des pièces constituant le bracelet et surtout élimine les vis collées et les goupilles chassées des réalisations traditionnelles.

Les usinages des pièces du bracelet sont simples à réaliser et peu onéreux.

L'assemblage du bracelet est facile dû à l'absence de vis et de goupilles chassées. Il est commun à un grand nombre de modèles et peut être facilement automatisé. L'assemblage est réversible à tout moment, le bracelet est donc démontable aisément soit pour une mise de longueur, soit pour le remplacement d'un maillon abîmé.

Certains composants tels que les goupilles et les éléments de blocage peuvent être standard et communs à plusieurs modèles. Ils peuvent donc être produits en grande quantité indépendamment des maillons du bracelet.

Les articulations ne sont pas visibles ce qui améliore l'esthétique et facilite le polissage.

Les maillons peuvent être remplacés individuellement sans démonter la totalité du bracelet.

La mise de longueur est réalisée facilement et sans outils. Elle est simplifiée du fait de l'absence de vis et de goupilles chassées. Elle est généralisée à l'ensemble du bracelet. Enfin elle peut être réalisée par l'utilisateur.

Les maillons sont tous identiques et interchangeables.

Dans une variante d'exécution il est possible de réaliser les éléments de blocage 8 en alliage à mémoire de forme de telle sorte qu'à température ambiante l'organe de blocage 8 soit dans sa forme "normale" et remplisse comme décrit plus haut sa fonction de positionnement et de blocage.

A une température différente de la température ambiante, plus faible ou plus haute, la forme de l'élément de blocage 8 se modifie pour pouvoir être dégagée des gorges 10 des goupilles 7 sans outils et sans efforts de traction.

Le matériau à mémoire de forme peut être par exemple un alliage Nickel + Titane qui présente les caractéristiques suivantes :

| | |
|---|---|
| Module d'Young (GPa) : | 70-90 (austénite) |
| Limite d'élasticité (Mpa) : | 100-800 (austénite) |
| | 50-300 (martensite) |
| température de transformation | -200-120°C |
| déformation EMF double sens (%) | 3,2 -5 |
| déformation pseudo élastique (%) | 4 -10 |

Il est évident que d'autre matériaux à mémoire de forme pourraient être également utilisés.

Le principe de fonctionnement de l'élément de blocage en matériau à mémoire de forme est le suivant :
- A température ambiante, par exemple de 0°C à 50°C, l'alliage est dans sa forme austénitique et l'élément de blocage est dans sa forme "normale".
- A une température différente de la température ambiante, par exemple à -40°C, l'alliage est dans sa forme martensitique. La forme de l'élément de blocage se modifie du fait de la "déformation Effet Mémoire de Forme" pour qu'il puisse être dégagé des goupilles.
- Lorsque l'élément de blocage revient à la température ambiante (donc sous sa forme austénitique), il reprend sa forme "normale".
- Plusieurs cycles sont possibles du fait de l'Effet Mémoire de Forme double sens obtenu après un processus d'éducation.
- La déformation pseudo élastique de l'alliage Nickel + Titane permet de mettre en place l'élément de blocage même dans sa forme "normale" sans le détériorer. Il est aussi possible de le refroidir pour modifier sa forme et le mettre en place sans déformation élastique.

La propriété de super élasticité que présentent les alliages à mémoire de forme constitue une garantie supplémentaire pour le maintien en position de service des éléments de blocage 8.

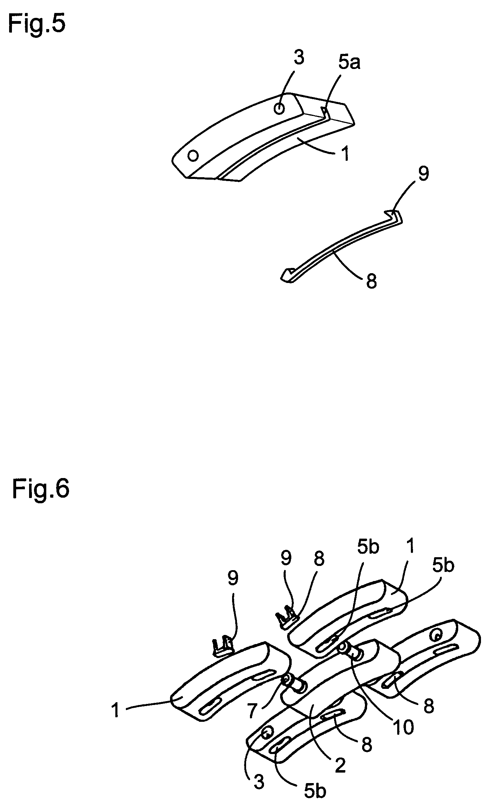

Pour la forme d'exécution décrite les organes de retenue 9 des éléments de blocage entrent en contact avec les surfaces tournées en direction l'une de l'autre de deux goupilles 7 adjacentes. Dans des variantes ceci pourrait être différent. Dans la variante illustrée à la figure 5 les éléments de blocage 8 sont formés par des barrettes, venant se loger dans des fraisures 5a des maillons latéraux 1. Les organes de retenue 9 prennent appui sur les surfaces opposées de deux goupilles 7 adjacentes.

Dans la variante illustrée à la figure 6 les éléments de blocage 8 ne coopèrent chacun qu'avec une seule goupille 7. Dans cette variante chaque maillon latéral 1 comporte deux évidements 5b recevant chacun un élément de blocage 8.

Dans tous les cas, quelle que soit la forme des éléments de blocage 8, ces éléments sont toujours logés dans un évidement d'un maillon latéral 1 et clipsés élastiquement sur une ou deux goupilles adjacentes 7, ces éléments de blocage bloquant les maillons 1,2 dans le sens transversal du bracelet sur les goupilles 7.

La seconde forme d'exécution du bracelet illustrée aux figures 2,3 et 4 comporte des maillons en forme de H dont les barres latérales forment des maillons latéraux 1, la barre centrale du H 11 constituant un maillon central intermédiaire destiné à être placé entre deux maillons centraux 2 de plus grande largeur.

Les maillons latéraux 1 et les maillons centraux 2 sont assemblés comme précédemment décrits à l'aide de goupilles 7 présentant des gorges 10 et d'éléments de blocage 8 destinés à se loger dans des évidements 5 des maillons latéraux 1 et à coopérer élastiquement avec le fond des gorges 10 des goupilles 7 par les organes de retenue 9.

Les maillons centraux intermédiaires 11, disposés entre deux maillons centraux adjacents 2, comportent sur leurs faces latérales des tétons 12 logés en position assemblée du bracelet dans des perçages borgnes 13 que comportent les maillons latéraux 1 entre leurs trous borgnes 3. Dans certaines exécutions où il est désiré que la position angulaire des maillons centraux intermédiaires 11, barre centrale du H, soit constante et déterminée par rapport aux maillons latéraux 1, les tétons 12 et les perçages borgnes 13 présentent une forme non cylindrique empêchant toute rotation relative de ces maillons 1,11.

Dans cette forme d'exécution également les éléments de blocage 8 peuvent coopérer avec une ou deux goupilles 7, les organes de retenue 9 étant disposés soit dans la gorge d'une goupille, soit clipsés entre deux goupilles adjacentes ou autour de deux goupilles adjacentes, toujours logés dans les gorges 10 de ces goupilles 7.

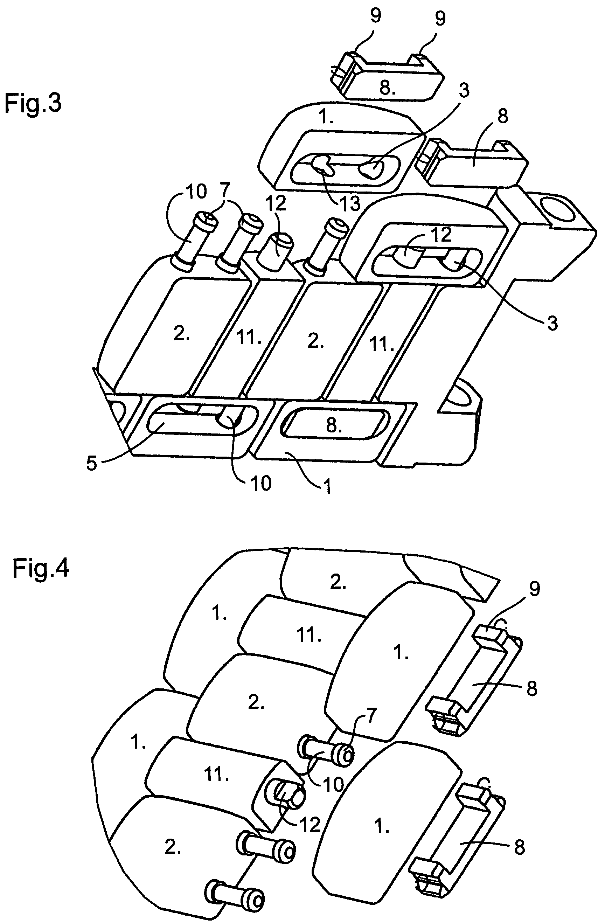

En effet l'élément de blocage 8 peut prendre appui, comme illustré à la figure 3, simultanément sur les deux faces "internes" de deux goupilles adjacentes, ou peut prendre appui, comme illustré à la figure 5, sur les deux faces "externes" de deux goupilles adjacentes. Si tel est le cas la déformation élastique de l'élément de blocage peut être plus grande, l'évidement devant le recevoir peut être formé par une simple saignée qui éventuellement débouche sur les faces frontales des éléments latéraux et l'élément de blocage, moins épais, peut être réalisé par découpage.

Dans le cas où l'élément de blocage est plus court et ne collabore qu'avec une seule goupille les maillons latéraux présentent deux évidements recevant chacun un tel élément de blocage. Dans ce cas l'élément de blocage peut être commun à un plus grand nombre de modèle de bracelet car il ne dépend plus de la distance entre l'axe des goupilles mais seulement du diamètre de ces goupilles.

Bien évidemment ces éléments de blocage peuvent également être réalisés en un alliage à mémoire de forme comme décrit précédemment.

Les extrémités du bracelet décrit peuvent être soit fixées directement sur un fermoir ou une boîte de montre par exemple, soit fixées à ces composants par l'intermédiaire d'une pièce ou maillon de jonction de forme appropriée.

On voit donc que ce nouveau bracelet est constitué d'un ensemble de maillons reliés et articulés entre eux au moyen de goupilles libres. Ces goupilles libres comportent deux gorges à leurs extrémités qui permettent le maintien en position des maillons dans le sens transversal au moyen d'un élément de blocage logé dans les maillons latéraux. Ces éléments de blocage se mettent et s'enlèvent facilement à la main sans outils et sont accessibles à partir de la face inférieure des maillons latéraux. Ce nouveau concept simplifie la fabrication du bracelet en supprimant les taraudages et les alésages précis ainsi que son assemblage en supprimant les vis et leur collage ainsi que le chassage des goupilles. Ainsi l'assemblage peut être automatisé et les contrôles de fabrication simplifiés. Le service après-vente est également grandement simplifié puisque le montage et le démontage ainsi que le remplacement d'un quelconque maillon du bracelet se fait sans outils et que chaque maillon est interchangeable individuellement.

## Revendications

1. Bracelet à maillons, notamment bracelet de montre, comportant deux rangées de maillons latéraux (1) formant les bords du bracelet et au moins une rangée de maillons centraux (2) disposée entre ces maillons latéraux, **caractérisé par le fait que** les maillons latéraux (1) comportent chacun deux trous borgnes (3) débouchant sur leur tranche interne dirigée vers les maillons centraux (2) et que les maillons centraux (2) sont traversés de deux trous traversant (6) chacun; **par le fait qu'**il comporte des goupilles libres (7) disposées dans les trous (3,6) des maillons latéraux (1) et centraux (2) librement mais sans jeu, ces goupilles comportant à chacune de leurs extrémités une gorge (10); **par le fait que** les maillons latéraux (1) comportent, débouchant sur leur face inférieure, au moins un évidement (5) donnant accès à une gorge de deux goupilles (7) adjacentes: et **par le fait qu'**il comporte encore des éléments de blocage (8) destinés à être insérés dans les évidements (5) des maillons latéraux (1) et comportant des organes de retenue (9) coopérant avec les gorges (10) des goupilles (7).

2. Bracelet selon la revendication 1, **caractérisé par le fait que** chaque maillon latéral (1) comporte un seul évidement (5) donnant accès aux gorges 10 de deux goupilles (7) adjacentes et **par le fait que** les organes de retenue 9 d'un élément de blocage coopèrent avec les faces externes des fonds de gorge (10) de deux goupilles (7) adjacentes lorsque cet élément de blocage (8) est inséré dans l'évidement (5) du maillon latéral (1).

3. Bracelet selon la revendication 1, **caractérisé par le fait que** chaque maillon latéral (1) comporte un seul évidement (5) donnant accès aux gorges (10) de deux goupilles (7) adjacentes et **par le fait que** les organes de retenue (9) d'un élément de blocage (8) coopérent avec les faces internes des fonds de gorge (10) de deux goupilles (7) adjacentes lorsque cet élément de blocage (8) est inséré dans l'évidement (5) du maillon latéral (1).

4. Bracelet selon l'une des revendications précédentes, **caractérisé par le fait que** chaque élément de blocage (8) est clipsé en position de service sur ou entre deux goupilles (7) adjacentes.

5. Bracelet selon la revendication 1, **caractérisé par le fait que** chaque maillon latéral (1) comporte deux évidements (5a) donnant accès chacun à une gorge (10) de deux goupilles (7) adjacentes et **par le fait que** chacun de ces évidements (5a) reçoit un élément de blocage (8) dont les organes de retenue (9) coopèrent avec la gorge d'une goupille (7).

6. Bracelet selon la revendication 5, **caractérisé par le fait que** chaque élément de blocage (8) est clipsé en position de service dans la gorge (10) d'une goupille.

7. Bracelet selon la revendication 4 ou la revendication 6, **caractérisé par le fait que** le clipsage des éléments de blocage (8) est obtenu par leurs déformations élastiques.

8. Bracelet selon la revendication 4 ou la revendication 6, **caractérisé par le fait que** les éléments de blocage (8) sont en alliage à mémoire de forme et que leur clipsage est obtenu par la forme de l'élément de blocage (8) en position de repos conjointement avec sa déformation élastique.

9. Bracelet selon l'une des revendications précédentes, **caractérisé par le fait qu'**il comporte encore des maillons centraux intermédiaires (11) disposés chacun entre deux maillons centraux (2) adjacents et **par le fait que** ces maillons centraux intermédiaires (11) sont montés entre deux maillons latéraux (1) opposés.

10. Bracelet selon la revendication 9, **caractérisé par le fait que** les maillons centraux intermédiaires (11) comportent des tétons (12) émergeant de leurs faces latérales, tétons (12) logés en position de service dans des logements (13) que comportent les maillons latéraux (1) entre leurs trous borgnes (3).

11. Bracelet selon la revendication 10, **caractérisé par le fait que** les tétons (12) et les logements (13) correspondants présentent une forme non cylindrique interdisant tout mouvement angulaire relatif entre les maillons latéraux (1) et les maillons centraux intermédiaires (11) correspondants.
